# EUROPEAN PATENT SPECIFICATION

(11) **EP 3 203 360 B1**
(45) Date of publication and mention of the grant of the patent: **07.08.2019**
(21) Application number: 16200416.2
(22) Date of filing: 10.01.2013
(51) Int. Cl.: G06F 3/048, G06F 3/041, G06F 3/0488, G06F 1/16

(54) **DISPLAY DEVICE, DISPLAY CONTROL METHOD, AND NON-TRANSITORY COMPUTER READABLE MEDIUM STORING DISPLAY CONTROL PROGRAM**
ANZEIGEVORRICHTUNG, ANZEIGESTEUERUNGSVERFAHREN UND NICHTTRANSIENTES COMPUTERLESBARES MEDIUM MIT DARAUF GESPEICHERTEM ANZEIGESTEUERUNGSPROGRAMM
AFFICHEUR, PROCÉDÉ DE COMMANDE D'AFFICHAGE, ET SUPPORT NON-TRANSITOIRE LISIBLE PAR ORDINATEUR MÉMORISANT UN PROGRAMME DE COMMANDE D'AFFICHAGE

(30) Priority: 14.05.2012 JP 2012110499
(43) Date of publication of application: 09.08.2017
(62) Divisional of application: 13790599.8
(73) Proprietor: NEC Corporation, Tokyo 108-8001 (JP)
(72) Inventor: Nakazawa, Yuko, Kanagawa, 211-8666 (JP)
(74) Representative: Vossius & Partner Patentanwälte Rechtsanwälte mbB

(56) References cited:
- WO-A1-2012/039230
- WO-A2-2011/085386
- JP-A- H05 324 640
- JP-A- 2008 158 975
- JP-A- 2010 092 340
- JP-A- 2011 204 127
- US-A1- 2001 011 993
- US-A1- 2006 227 106
- US-A1- 2008 168 404
- US-A1- 2011 209 057
- US-A1- 2011 234 515
- US-A1- 2013 009 904

## Description

### Technical Field

The present invention relates to a display device, a display control method, and a non-transitory computer readable medium storing a display control program. In particular, the present invention relates to a technique for displaying display information in each of a plurality of display areas.

### Background Art

There is a method for a touch panel in which: first and second display areas each of which is capable of displaying display information are provided; and scrolling of display information in each of the display areas is independently performed by performing a scrolling action of display information displayed in the first display area and a scrolling action of display information displayed in the second display area by using different action instructions.

Specifically, there in a method for receiving a scrolling action in which: when a scrolling action is performed by one finger within the first display area, the scrolling action is determined to be a scrolling action for display information displayed in the first display area; and when a scrolling action is performed by two fingers within the second display area, the scrolling action is determined to be a scrolling action for display information displayed in the second display area.

However, in this operation method, a user needs to take account of the number of finger's contacts in the display area to indicate which of the display areas the user wants to perform the action for. That is, the user needs to perform a scrolling action after determining whether the scrolling action that can be received in the target display area should be performed by one finger or two fingers.

Therefore, it is necessary to determine what kind of action needs to be performed in which display area, thus causing a problem that an action(s) for updating the display states of display information displayed in a plurality of display areas is not intuitive and is complicated.

Note that Patent Literature 1 discloses a mobile phone whose object is to display an object in such a fashion that the object is moved among a plurality of display sections by using an easy, intuitive action(s). In this mobile phone, when a hardware key is pressed while a touch action is being performed on a graphic object on a first touch panel, that graphic object is defined as a target whose display position is to be changed. After that, when a touch action is performed on a second touch panel, the graphic object, which has been defined as the target, is moved from the first touch panel to the second panel and displayed on the second touch panel.

Further, Patent Literature 2 discloses a mobile phone whose object is to reduce the operation burden imposed on a user when the user scrolls and displays each of data displayed in respective display sections. In this mobile phone, when a user touches one of two touch panels with one finger and moves that finger, only the screen of that touch panel is scrolled. Further, when the user touch the touch panel with two fingers and moves those fingers, the screens that are respectively displayed in the two touch panels are scrolled in an interlocking manner.

However, neither of Patent Literatures 1 and 2 discloses any technique that enables an intuitive, easy-to-understand action(s) by using a technique similar to that of the invention of the present application.
Patent Literature 1: JP-2011-221661 A
Patent Literature 2: JP-2011-204127 A

JP 2010 092340 A relates to an image display/image detection apparatus which activates an application in an image display area desired by a user.

US 2011/234515 A1 relates to a terminal device, wherein when a slide operation performed on at least either of a plurality of touch screens is detected, a control section performs display control based on a judgment result indicating whether or not another screen is present in the sliding direction.

US 2011/209057 A1 relates to multi-screen hold and page-flip gesture, wherein a hold input is recognized at a first screen of a multi-screen system, and the hold input is recognized when held to select a journal page that is displayed on the first screen.

US 2006/0227106 A1 relates to an input position processing program for detecting a series of pieces of position data based on input positions outputted from a pointing device.

### Summary of Invention

### Technical Problem

As described above, there is a problem that when display information is displayed in each of a plurality of display areas, an action(s) for updating the display states of display information needs to be intuitive and easy-to-understand.

To solve the above-described problem, an object of the present invention is to provide a display device, a display control method, and a non-transitory computer readable medium storing a display control program capable of updating the display states of display information displayed in a plurality of display areas by using an intuitive, easy-to-understand action(s).

### Solution to Problem

There are provided display devices in accordance to appended independent claims and 2, display control methods in accordance to appended independent claims 3 and 4, and computer readable medium in accordance to appended independent claims 5 and 6.

### Advantageous Effects of Invention

According to the present invention, it is possible to provide a display device, a display control method, and a non-transitory computer readable medium storing a display control program capable of updating the display states of display information displayed in a plurality of display areas by using an intuitive, easy-to-understand action(s).

### Brief Description of Drawings

Fig. 1 is a block diagram showing a configuration of a display device according to an exemplary embodiment of the present invention;
Fig. 2 is a flowchart showing processes of a display device according to an exemplary embodiment of the present invention;
Fig. 3A - 7C show display examples of a display unit according to exemplary embodiments; and
Fig. 8 is a block diagram showing a schematic configuration of a display device according to an exemplary embodiment of the present invention.

### Description of Embodiments

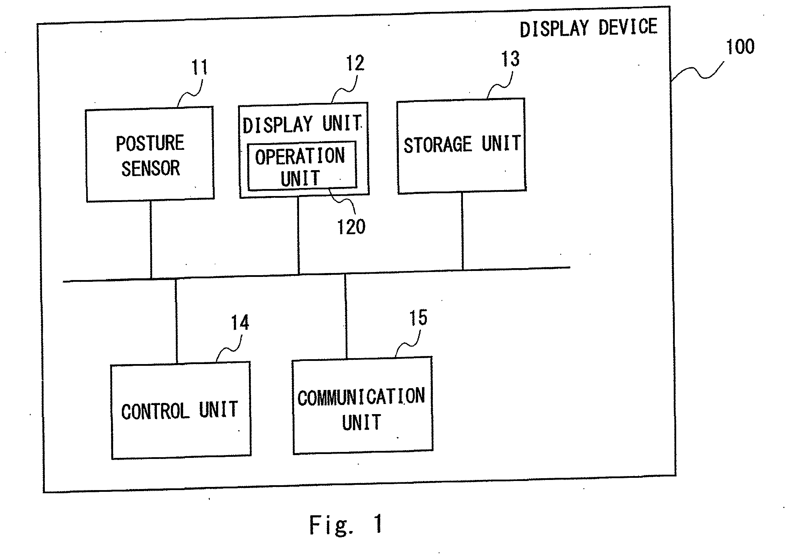

Firstly, a configuration of a display device 100 according to an exemplary embodiment of the present invention is explained with reference to Fig. 1. Fig. 1 is a block diagram showing the configuration of the display device 100 according to an exemplary embodiment of the present invention.

The display device 100 includes a posture sensor 11, a display unit 12, a storage unit 13, a control unit 14, and a communication unit 15. The display unit 12 includes an operation unit 120. In this exemplary embodiment, an example case where the display device 100 is a mobile phone is shown.

The posture sensor 11 detects an angular speed of the display device 100. The posture sensor 11 notifies the control unit 14 of the detected angular speed. Examples of the posture sensor 11 include a gyroscope (gyroscopic sensor).

The display unit 12 displays arbitrary display information according to an instruction from the control unit 14. The display unit 12 can form a plurality of display areas each of which is capable of displaying the same display information or different display information items. The operation unit 120 receives an input action performed on the display surface of the display unit 12 by a user. The operation unit 120 can detect the position of an action performed on the display surface of any of the display areas. The operation unit 120 notifies the control unit 14 of the action performed by the user. Note that in this exemplary embodiment, a case where the display device 100 is the so-called "smart phone" and the display unit 12 is a touch panel is explained. In this case, the operation unit 120 detects the position of a touch performed on the touch panel by a user.

The storage unit 13 stores various information items that are generated, referred to, and so on by the control unit 14. The storage unit 13 includes at least one storage devices capable of storing various information items. Examples of the storage device include a memory and a hard disk drive.

The control unit 14 changes the display position of display information and so on based on the action, which is performed by the user and notified from the operation unit 120. The control unit 14 includes, for example, a CPU (Central Processing Unit), and the control unit 14 can be implemented by causing the CPU to execute a program for causing the CPU to execute the processed according to this exemplary embodiment.

The communication unit 15 transmits/receives various information items to/from other mobile phones through a mobile base station. Further, the communication unit 15 receives information representing display contents of various webpages (HTLM text data, images within pages, and so on) from a webserver (not shown) on the Internet through the mobile base station. That is, the communication unit 15 includes a radio communication device, an antenna, and so on that enable transmission/reception of various information items to/from the mobile base station through radio communication.

As described above, a case where the display device 100 is a touch-panel-type display device is explained in this exemplary embodiment. However, the display device 100 may include a touch panel device capable of adjusting a threshold or the like for a capacitance change rate and thereby capable of detecting an action performed by a finger or a stylus pen even in a proximity state, which is a non-contact state, as a display device that functions as the display unit 12.

Note that each display area may be one of a plurality of areas obtained by dividing the display surface of one display device. Alternatively, the display device 100 may include a plurality of independent display devices (i.e., display units) and each display area may be the display surface of one of the plurality of display units 12. In this exemplary embodiment, a case where the display device 100 is a two-screen-type display device includes two display devices arranged side by side as the display unit(s) 12 and first and second display areas are independently defined in the respective display devices is explained.

The display device 100 receives, as an action for indicating a movement for display information performed by a user, a series of actions in which display information displayed in one of the display areas is specified by touching the display information with one or a plurality of fingers and then a sliding action (including a flick action) having a directional property is performed.

In response to a notification of this action sent from the operation unit 120, the control unit 14 recognizes that the display information specified by the notified action is the display information to be moved. Note that the display information may be an image that is displayed in a part of the display area or an image that is entirely displayed in the entire display area. Alternatively, the display information may be an image that is partially displayed in the entire display area (i.e., an image that includes a non-displayed part). Examples of the image that is displayed in a part of the display area include an icon and a widget. Examples of the image that is partially displayed in the entire display area include a webpage that can be displayed in such a manner that parts of the webpage are successively displayed by scrolling the webpage.

In this exemplary embodiment, a case where display information is an image of a webpage that is viewed through a web-browser, i.e., an image that is partially displayed in the entire display area is explained hereinafter. That is, the communication unit 15 outputs information received from a web-browser to the control unit 14. An example case where the control unit 14 displays an image of a webpage in each display area of the display unit 12 based on information output from the communication unit 15 is shown. Alternatively, the control unit 14 may store the information output from the communication unit 15 in the storage unit 13 and may display the image of the webpage by referring to the information stored in the storage unit 13.

Note that the image displayed in each display area of the display unit 12 is not limited to the above-described image. For example, image information representing an image(s) may be stored in the storage unit 13 in advance, and the control unit 14 may display the same image or a different image in each display area of the display unit 12 based on the image information stored in the storage unit 13. In this case, the image information corresponds to, for example, a still image file representing a still image (an illustration, a picture, and so on), a moving image file representing a moving image (a video image), and so on.

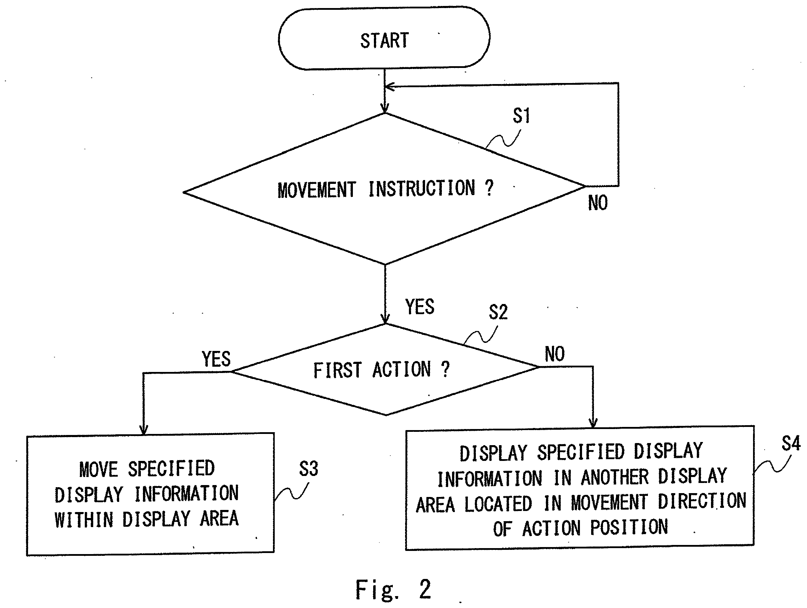

Next, processes performed by the display device 100 according to an exemplary embodiment of the present invention are explained with reference to Fig. 2. Fig. 2 is a flowchart showing processes of the display device 100 according to an exemplary embodiment of the present invention.

The operation unit 120 generates operation information representing an input action performed by a user according to that input action, and outputs the generated operation information. The operation information is information representing the position of a touch and its touch state (touch strength) performed on the operation unit 120 (touch panel) by the user. When the control unit 14 detects the touch on the display information displayed in the display area based on the operation information output from the operation unit 120, the control unit 14 determines whether the position of the touch is moving with a specific directional property or not (step S1). That is, the control unit 14 determines whether the touch position represented by the operation information output from the operation unit 120 is moving in a specific direction or not based on that operation information.

When the control unit 14 determines that the touch position is moving, the control unit 14 determines that the action is a movement instruction for the touched display information (step S1: Yes). In this case, the control unit 14 checks the number of contact points of the touch on the operation unit 120 in that movement instruction. Based on this check, when the number of contact points is one, the control unit 14 determines that the action is a first action (step S2: Yes). On the other hand, when the number of contact points is two or more, the control unit 14 determines that the action is a second action (step S2: No).

When the control unit 14 determines that the action is the first action (step S2: Yes), the control unit 14 instructs the display unit 12 to move the display information specified by the touch in the display area (including scrolling) based on the movement direction and the movement amount of the touch position in the first action and display the display information in the moved place (step S3). Specifically, the control unit 14 generates information representing a display image in which the display information is moved (or scrolled) in the display area, and outputs the generated information to the display unit 12. This display image is an image that is obtained by moving (or scrolling) the original display information in the direction in which the touch position has moved in the first action by an amount corresponding to the movement amount of the touch position. Then, the display unit 12 displays the display image represented by the information output from the control unit 14. Note that the control unit 14 calculates the movement direction and the movement amount of the touch position based on the operation information output from the operation unit 120.

According to this, a user can move (or scroll) display information displayed in a display area of the display unit 12 within that display area by performing a first action for that display information displayed. In particular, in the case where the display information is a webpage that is displayed through a web-browser as described above, a part that has been present in the movement direction of the touch position in the first action and hence has not been displayed will be scrolled and displayed by the first action.

On the other hand, when the control unit 14 determines that the action is the second action (step S2: No), the control unit 14 instructs the display unit 12 to move the display information specified by the touch on the display unit 12 to another display area located in the movement direction of the touch position based on the movement direction and the movement amount of the touch position in the second action and display the display information in the another display area (step S4). Specifically, the control unit 14 generates information representing a display image that is obtained by moving the display image displayed in the original display area to another display area, and outputs the generated information to the display unit 12. Then, the display unit 12 displays the display image represented by the information output from the control unit 14.

Note that the above explanation is made on the assumption that when the movement instruction is a second action, the display information is moved to the outside of the display area (i.e., to another display area) instead of moving the display information within the original display area. However, the control unit 14 may regard a movement instruction as a movement instruction within the display area when the movement amount of the touch position in the second action is less than a predetermined threshold, and may regard a movement instruction as a movement instruction to the outside of the display area when the movement amount of the touch position in the second action is equal to or greater than the predetermined threshold.

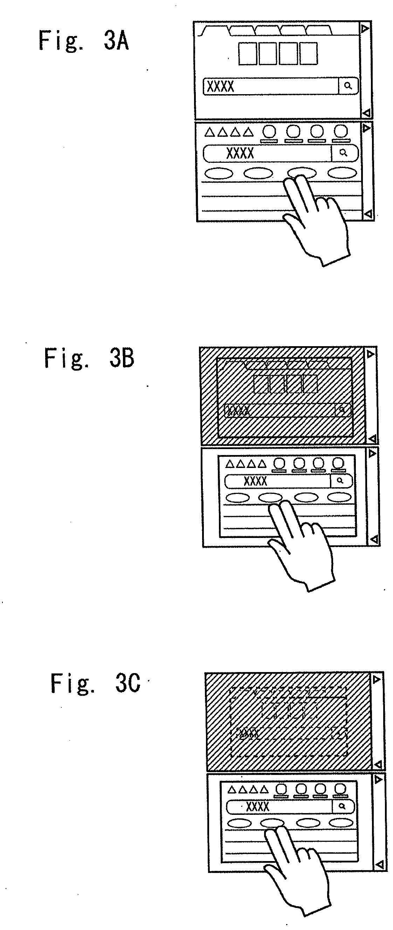

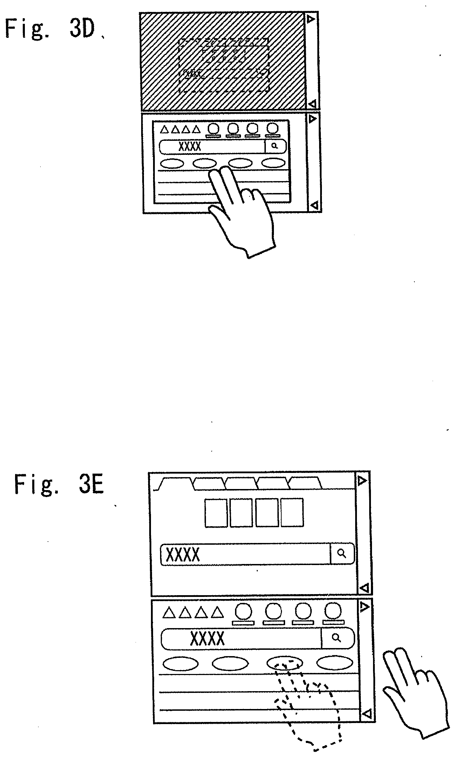

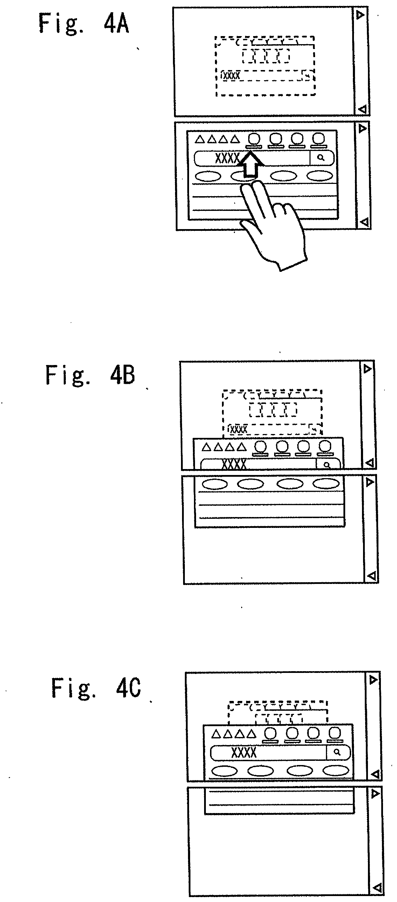

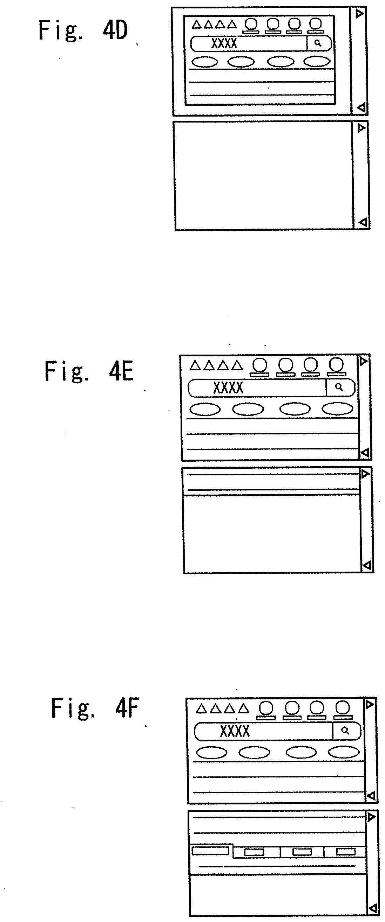

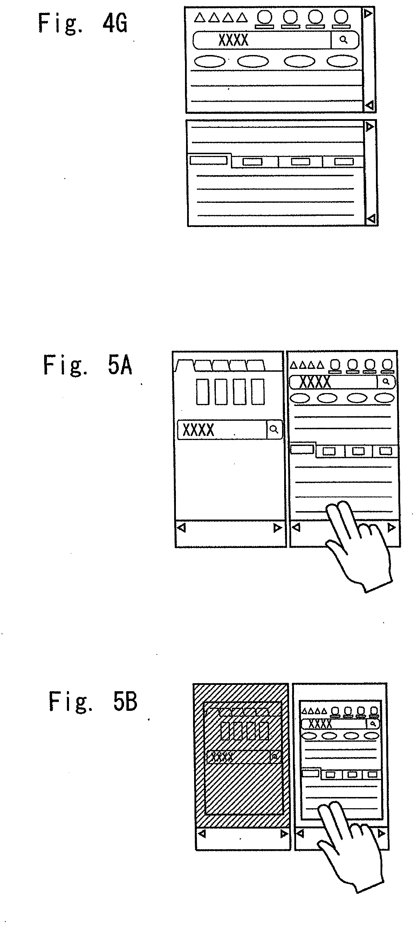

Next, displaying processes in response to a second action are explained in detail with reference to Figs. 3A to 3E and Figs. 4A to 4G. Figs. 3A to 3E and Figs. 4A to 4G show display examples of the display unit 12 according to exemplary embodiments.

When the control unit 14 determines that a movement instruction is a second instruction but other display information is already displayed in the display area to which the display information specified by the second action is to be moved, the control unit 14 instructs the display unit 12 to delete the other display information and thereby deletes the other display information. Next, the control unit 14 instructs the display unit 12 to display the display information specified by the second action in the display area located in the movement direction in the second action. The display unit 12 displays the display information specified by the second action in the another display area according to the instruction from the control unit 14.

For example, in the case where two display areas are arranged in the vertical direction in the display unit 12 as shown in Fig. 3A, when a second action whose movement direction is directed toward the upper display area is performed on display information displayed in the lower display area, the control unit 14 instructs the display unit 12 to delete other display information displayed in the upper display area. Further, at the same time, the control unit 14 instructs the display unit 12 to delete the display information specified by the second action from the lower display area, which has received the second action, and display that display information in the upper display area.

Specifically, the control unit 14 gives these instructions by generating information representing a display image that is obtained by deleting the original display information displayed in the upper display area, displaying the display information originally displayed in the lower display area in the upper display area, and deleting that display information from the lower display area, and outputting the generated information to the display unit 12. Then, the display unit 12 displays the display image represented by the information output from the control unit 14 in the upper and lower display areas.

Therefore, from user's point of view, when a user performs a sliding (or flicking) action for moving display information from bottom to top with two fingers as the second action on the display information displayed in the lower display area in the display unit 12 in which the upper and lower display areas are arranged, the user observes as if the display information in the lower display area disappears and that display information is displayed in the upper display area.

In this process, an effect may be added in the deletion process of the display information in the upper display area so that the display information gradually disappears. For example, as shown in Figs. 3B to 3D, the display information may fade out. Alternatively, the display information may be shaved bit by bit and eventually disappears. This process is implemented by making the control unit 14 successively generate information pieces representing display images and output the generated information pieces to the display unit 12 and making the display unit 12 display the display images represented by the information pieces successively output from the control unit 14 so that it is displayed as if the display information displayed in the upper display area gradually disappears.

Further, when the control unit 14 determines that the user touches the display information displayed in the lower display area so that the number of contacts points is at least two based on the operation information output from the operation unit 120, the control unit 14 may fade out the display information displayed in the upper display area as in the case of the above-described case shown in Figs. 3B to 3D even when no sliding (or flicking) action is performed. Further, in this case, the control unit 14 may instruct the display unit 12 to display the display information items displayed in the respective display areas in a size one size smaller than the original size (i.e., a size smaller than the original size by a predetermined reduction rate) as shown in Fig. 3B. Further, in this process, when the control unit 14 determines that the user stops performing the touching which is performed so that the number of contacts points is at least two based on the operation information output from the operation unit 120, the control unit 14 may fade in the display information displayed in the upper display area and thereby restore it to the original display state as shown in Fig. 3E. This process is implemented by making the control unit 14 successively generate information pieces representing display images and output the generated information pieces to the display unit 12 and making the display unit 12 display the display images represented by the information pieces successively output from the control unit 14 so that it is displayed as if the display information displayed in the upper display area fades in.

Further, as shown in Fig. 4A, when the display information on the lower display area receives a second action, the control unit 14 may display images so that it is displayed as if the display information, which has received the second action, rises from the lower display area to the upper display area as shown in Figs. 4B to 4D. This process is implemented by making the control unit 14 successively generate information pieces representing display images and output the generated information pieces to the display unit 12 and making the display unit 12 display the display images represented by information pieces successively output from the control unit 14 so that it is displayed as if the display information rises from the lower display area to the upper display area.

Further, after moving the display information specified by the second action from the lower display area to the upper display area, the control unit 14 determines whether or not there is any non-displayed part in the display information, which is now displayed in the upper display area, i.e., displayed in the destination display area.

When there is a non-displayed part, the control unit 14 performs a displaying process for the non-displayed part by using a display area(s) other than the destination display area. For example, as shown in Figs. 4E to 4G, when there is a non-displayed part in the display information, which has been moved to the upper display area, the control unit 14 may perform a displaying process so that the non-displayed part in the upper display area extends to the lower display area and thus is displayed in the lower display area. This process is implemented by making the control unit 14 successively generate information pieces representing display images and output the generated information pieces to the display unit 12 and making the display unit 12 display the display images represented by information pieces successively output from the control unit 14 so that the non-displayed part of the display information appears as if it extends from the upper display area to the lower display area and is displayed in the lower display area.

In this way, when a plurality of information items are displayed in respective display areas and a user desires to concentrate on and check one display information item, the user can change the display state by a second action so that only that display information item is displayed and the user can check that display information item with an increased amount of information. That is, it is possible to increase the range for displaying the display information by displaying the non-displayed part of the display information by using a display area to which the display information has been moved by a second action in addition to the display area where the display information is originally displayed. As a result, it is possible to reduce the frequency of displaying processes performed for displaying the non-displayed part by scrolling the display information, and thereby to reduce the load that is imposed by the processes for displaying the display information in the display device 100.

In this manner, a user can continue checking display information specified by a movement instruction action in a different display area(s) by performing a second action. Further, since display content subsequent to the display content of the display information displayed in the destination display area is displayed in another display area in an extended manner, the user can also check the non-displayed part of the display information in addition to the displayed part of the display information. Therefore, the user can also check the non-displayed part of the display information in the extended display area, thus enabling the display control to be performed without impairing the user-friendliness. Further, it is possible to regard the extended display areas as one large display area. That is, the user can give a display information movement instruction by performing a first action.

That is, in this state, when a first action is performed on either of the first and second display areas, the control unit 14 may instructs the display unit 12 to display the display information so that the display information pieces displayed in the respective display areas are moved (or scrolled) in a synchronized manner. This instruction is implemented, when the control unit 14 detects that a first action is performed based on operation information output from the operation unit 120, by making the control unit 14 generate information representing a display image that is obtained by moving (or scrolling) the display information pieces in the respective display areas and output the generated information to the display unit 12 and making the display unit 12 display the display image represented by the information output from the control unit 14. Note that as in the case of the display image explained above, this display image is an image that is obtained by moving (or scrolling) the original display information in the direction in which the touch position has moved in the first action by an amount corresponding to the movement amount of the touch position.

As described above, a user can intuitively perform actions for display information items displayed in a plurality of display areas such as selecting necessary display information and moving (or scrolling) display information in a desired display area(s) by using resembling action forms (first and second actions).

Speaking of the intuitive actions in this specification, in the action in which a user moves display information toward a display area to which a user wants to move the display information with two fingers, which is explained above as the second action, for example, the operations according to actions include a feature that display information is specified by an action for specifying an action position, a feature that the destination of the specified display information is specified by an action for changing the action position at which the action is received, a feature that the movement range (whether within the display area or in another display area) is specified based on the number of fingers in the action, a feature that display information in the destination display area that does not need to be displayed any longer is hidden, and so on. For each action, an action that is directly associated with its operation is reflected. Therefore, each action is an action having an intuitive sense of action.

### <Other exemplary embodiments according to the invention>

Note that the above-described exemplary embodiment can be modified and implemented as shown hereinafter.

### (Part 1)

When a movement instruction is given, display control information representing the display form of display information as well as the display information itself may be moved (applied) from the original place to the destination. For example, in the case of a displaying process in response to a second action, the display form such as an enlargement rate and a font used in the original display area may be maintained in the destination display area.

Specifically, for example, in the case where the control unit 14 stores display control information representing the display form of display information displayed in the upper display area and display control information representing the display form of display information displayed in the lower display area into the storage unit 13 and the display information items in the respective display areas are displayed in the display forms represented by the respective display control information stored in the storage unit 13, the display form can be maintained by updating (i.e., changing) the display control information for the upper display area to that for the lower display area in response to a second action for moving the display information displayed in the lower display area to the upper display area. As a result, the user can save his/her trouble since he/she does not need to readjust the display information, whose enlargement rate was adjusted in the original display area before the movement, in the destination display area after the movement.

### (Part 2)

Although cases where the display device 100 is used in a state where display areas are vertically arranged are explained in this exemplary embodiment, the arrangement is not limited to the vertical arrangement. That is, similar displaying processes may be performed when the display device 100 is used in a state where display areas are horizontally arranged.

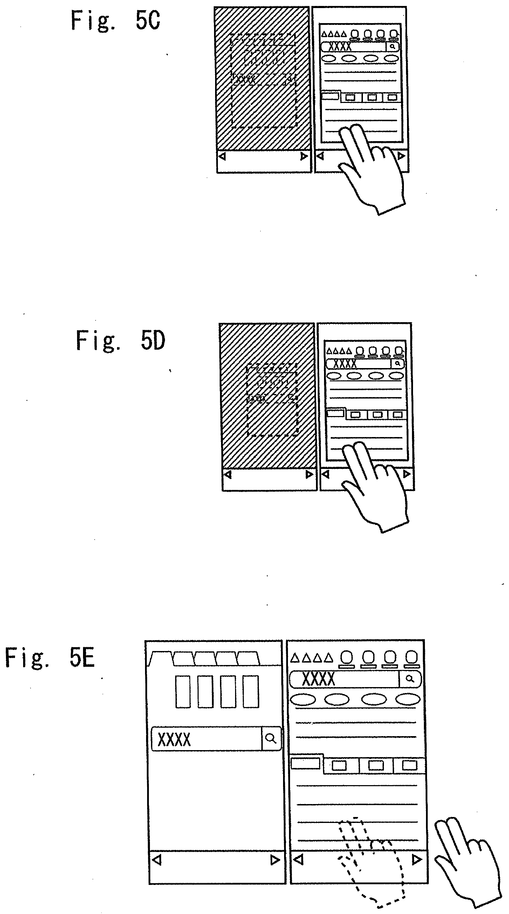

That is, in the case where two display areas are arranged in the horizontal direction in the display unit 12 as shown in Fig. 5A, when a second action whose movement direction is directed toward the left display area is performed on display information in the right display area, the control unit 14 instructs the display unit 12 to delete other display information displayed in the left display area. Further, at the same time, the control unit 14 instructs the display unit 12 delete the display information specified by the second action from the right display area, which has received the second action, and display that display information on the left display area. Note that similarly to the above-described exemplary embodiment, these instructions are implemented by making the control unit 14 output information representing a display image that is displayed after the display information is moved and making the display unit 12 display the display image in the left and right display areas based on the information output from the control unit 14.

Further, in this process, an effect may be added in the deletion process of the display information in the left display area so that the display information gradually disappears. For example, as shown in Figs. 5B to 5D, the display information may fade out. Alternatively, the display information may be shaved bit by bit and eventually disappears. For this process, similarly to the above-described exemplary embodiment, it is also implemented by making the control unit 14 successively generate information pieces representing display images and output the generated information pieces to the display unit 12 and making the display unit 12 display the display images based on information pieces successively output from the control unit 14 so that it is displayed as if the display information displayed in the left display area gradually disappears.

Further, when the control unit 14 determines that the user touches the display information displayed in the right display area so that the number of contacts points is at least two based on the operation information output from the operation unit 120, the control unit 14 may fade out the display information displayed in the left display area as in the case of the above-described case shown in Figs. 5B to 5D even when any sliding (or flicking) action is performed. Further, in this case, the control unit 14 may instruct the display unit 12 to display the display information items displayed in the respective display areas in a size one size smaller than the original size (i.e., a size smaller than the original size by a predetermined reduction rate) as shown in Fig. 5B. Further, in this process, when the control unit 14 determines that the user stops performing the touching which is performed so that the number of contacts points is at least two based on the operation information output from the operation unit 120, the control unit 14 may fade in the display information displayed in the left display area and thereby restore it to the original display state as shown in Fig. 5E. For this process, similarly to the above-described exemplary embodiment, it is also implemented by making the control unit 14 successively generate information pieces representing display images and output the generated information pieces to the display unit 12 and making the display unit 12 display the display images represented by information pieces successively output from the control unit 14 so that it is displayed as if the display information displayed in the left display area fades in.

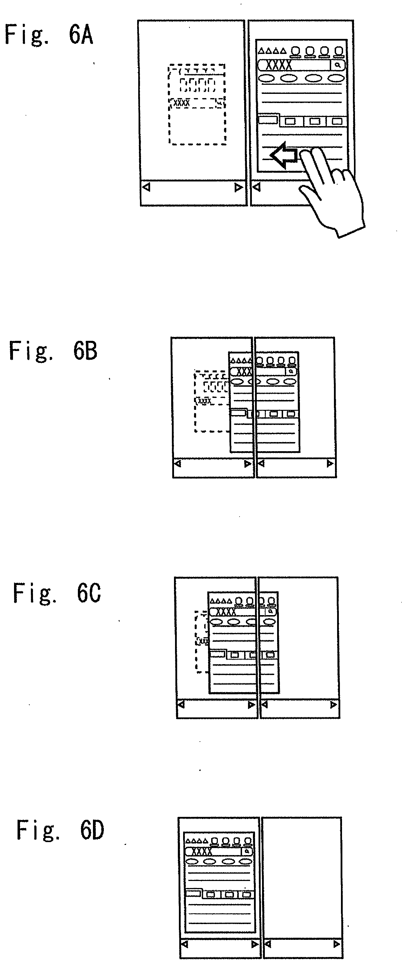

Further, as shown in Fig. 6A, when the display information on the right display area receives a second action, the control unit 14 may display images so that it is displayed as if the display information, which has received the second action, slides from the right display area to the left display area as shown in Figs. 6B to 6D. For this process, similarly to the above-described exemplary embodiment, it is also implemented by making the control unit 14 successively generate information pieces representing display images and output the generated information pieces to the display unit 12 and making the display unit 12 display the display images represented by information pieces successively output from the control unit 14 so that it is displayed as if the display information slides from the right display area to the left display area.

Further, when there is a non-displayed part in the display information, the control unit 14 may perform a displaying process for the non-displayed part by using a display area(s) other than the destination display area. For example, when there is a non-displayed part in the display information, which has been moved to the left display area, the control unit 14 may perform a displaying process so that the non-displayed part in the left display area extends to the right display area and thus is displayed in the right display area. For this process, similarly to the above-described exemplary embodiment, it is also implemented by making the control unit 14 successively generate information pieces representing display images and output the generated information pieces to the display unit 12 and making the display unit 12 display the display images represented by information pieces successively output from the control unit 14 so that the non-displayed part of the display information appears as if it extends from the left display area to the right display area and is displayed in the right display area.

Owing to these processes, even in the case of a display device capable of being used by a user in such a manner that the display device is changed from a state where the display device is held so that two display areas should be vertically arranged to a state where the display device is held so that two display areas should be horizontally arranged, the user can use the display device while specifying the display area(s) the user wants to use and the number of display areas as desired by a second action without being restrained by the arrangement of the display areas.

### (Part 3)

Even in the case of a display device having three or more display areas as well as the double-screened display device having two display areas, a displayed item(s) may be moved to a display area adjacent to the original display area where the second action is performed or to a display area located in the movement direction in a second action based on direction information included in the second action. As a result, even in the case of a display device having three or more display areas, desired display information can be displayed by using the display area where the display information is originally displayed and the display area where the display information is moved so that the display information specified by the second action is displayed with an increased amount of information.

### (Part 4)

In general, the display direction switching according to the vertical or horizontal arrangement of display areas like the one described above is performed according to a detection result obtained by the posture sensor 11. Specifically, when the control unit 14 determines that the display device 100 is held so that the display areas should be vertically arranged based on the posture (angle) of the display device 100 calculated from an angular speed detected by the posture sensor 11, the control unit 14 controls the display unit 12 so that the display information is displayed in the positive direction (i.e., as shown in Figs. 3A-3E and 4A-4G) in that state. Further, when the control unit 14 determines that the display device 100 is held so that the display areas should be horizontally arranged, the control unit 14 controls the display unit 12 so that the display information is displayed in the positive direction (i.e., as shown in Figs. 5A-5E and 6A-6D) in that state. Alternatively, the display direction may be switched according to the relative positional relation between the display information specified by the second action and the destination display area of that display information. Note that the following explanation is made on the assumption that when the display areas are vertically arranged, the size in the vertical direction of the display range in the extended display state is longer than that in the horizontal direction as shown in Figs. 3A-3E and 4A-4G. That is, as shown in Figs. 5A-5E and 6A-6D, the following explanation is made on the assumption that when the display areas are horizontally arranged, the size in the horizontal direction of the display range in the extended display state is longer than that in the vertical direction.

For example, when the display areas are vertically arranged and the display information displayed in the destination display area has a non-displayed part(s) only in the horizontal direction (for example, there is a scroll-bar only in the horizontal direction), the non-displayed part can be displayed more effectively when the extended display state consisting of the horizontally-arranged display areas is used, instead of using the extended display state consisting of the vertically-arranged display areas. Therefore, in this case, the control unit 14 may perform the extended display while switching the display state from the state where the display areas are vertically arranged as shown in Figs. 3A-3E and 4A-4G to the state where the display areas are horizontally arranged as shown in Figs. 5A-5E and 6A-6D. Note that the switching of the display direction is implemented by by making the control unit 14 generate information representing a display image in which the display direction of the display information is changed and output the generated information to the display unit 12 and making the display unit 12 display the display image represented by the information output from the control unit 14. This also holds true for the display direction switching explained below.

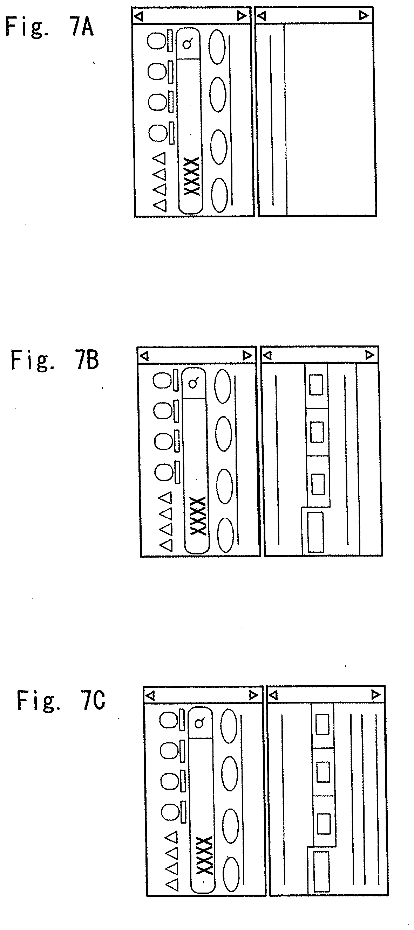

For example, when the display areas are horizontally arranged and the display information displayed in the destination display area has a non-displayed part(s) only in the vertical direction (for example, there is a scroll-bar only in the vertical direction), the non-displayed part can be displayed more effectively when the extended display state consisting of the vertically-arranged display areas is used, instead of using the extended display state consisting of the horizontally-arranged display areas. Therefore, in this case, the control unit 14 may perform the extended display while switching the display state from the state where the display areas are horizontally arranged as shown in Figs. 5A-5E and 6A-6D to the state where the display areas are vertically arranged as shown in Figs. 3A-3E and 4A-4G. As a result, as shown in Figs. 7A to 7C, the display areas are vertically arranged and thus the display information can be displayed with the extended display range.

Further, the display direction switching in a display state where display areas are vertically or horizontally arranged may be performed by first calculating the amount of the non-displayed part(s) when the display information is displayed in an extended state and then switching the display direction according to the calculation result.

The following explanation is made on the assumption that display areas are vertically arranged. For example, the control unit 14 calculates the size in the vertical direction of the non-displayed part of the display information specified by a second action and the size of the non-displayed part in the horizontal direction based on the vertical and horizontal sizes of that display information and the vertical and horizontal sizes of the display area when the display information is displayed in the extended state (the combined area of the first and second display areas). Usually, the control unit 14 can recognize the vertical and horizontal sizes of the display information when the information to be output to the display unit 12 is generated. For example, the vertical and horizontal sizes of the display information are included in the above-described display information. Further, the vertical and horizontal sizes of the display information when the display information is displayed in the extended state may be stored in the storage unit 13 in advance, for example, and the control unit 14 may recognize the vertical and horizontal sizes by referring to the stored information. Then, the control unit 14 determines which of the size of the non-displayed part of the display information displayed in the vertical direction and the size of the non-displayed part of the display information displayed in the horizontal direction is larger.

When the size of the non-displayed part of the display information displayed in the vertical direction is larger, the control unit 14 does not switch the display direction according to the determination that the display device 100 is held so that the display areas should be vertically arranged, and therefore displays the display information in the extended display state in the state where the display areas are vertically arranged. This is because the vertical direction of the display information in which the non-displayed part is large coincides with the direction in which the display range is large in the extended display state. On the other hand, when the size of the non-displayed part of the display information displayed in the horizontal direction is larger, there will be the considerable amount of the non-displayed part in the horizontal direction when the display information is displayed in the extended state in the state where the display areas are vertically arranged, thus raising the possibility that the display information cannot be efficiently checked. Therefore, in this case, the control unit 14 switches the display direction and displays the display information in the extended state in the state where the display areas are horizontally arranged even when the control unit 14 determines that the display device 100 is held so that the display areas should be vertically arranged. As a result, the display information is rotated so that the horizontal direction of the display information in which the non-displayed part is large coincides with the direction in which the display range is large in the extended display state, thus making it possible to reduce the non-displayed part of the display information. Note that when the control unit 14 determines that if the display direction is switched based on the vertical and horizontal sizes of the display information specified by a second action and the vertical and horizontal sizes of the display range capable of displaying display information in the extended display state, the size of the display information displayed in the vertical direction after the switching will become larger, instead of becoming smaller, than the size of the display information displayed in the horizontal direction before the switching, the control unit 14 may cancel the switching.

Note that when the display areas are horizontally arranged and the size of the non-displayed part of the display information displayed in the vertical direction is larger, the control unit 14 switches the display direction and displays the display information in the extended display state in the state where the display areas are vertically arranged as shown in Figs. 7A to 7C even when the control unit 14 determines that the display device 100 is held so that the display areas should be horizontally arranged. On the other hand, when the size of the non-displayed part of the display information displayed in the horizontal direction is larger, the control unit 14 does not switch the display direction according to the determination that the display device 100 is held so that the display areas should be horizontally arranged, and therefore displays the display information in the extended display state in the state where the display areas are horizontally arranged. Note that when the control unit 14 determines that if the display direction is switched based on the vertical and horizontal sizes of the display information specified by a second action and the vertical and horizontal sizes of the display range capable of displaying display information in the extended display state, the size of the display information displayed in the horizontal direction after the switching will become larger, instead of becoming smaller, than the size of the display information displayed in the vertical direction before the switching, the control unit 14 may cancel the switching.

As explained above, it is possible to efficiently display the display information in the display areas for the user after changing to the extended display state by calculating the relative sizes of the non-displayed part and, if necessary, automatically changing the display direction of the display information. As a result, a user can efficiently view the display information without being required to determine the necessity of the display direction switching.

### <Outline of exemplary embodiments according to the invention>

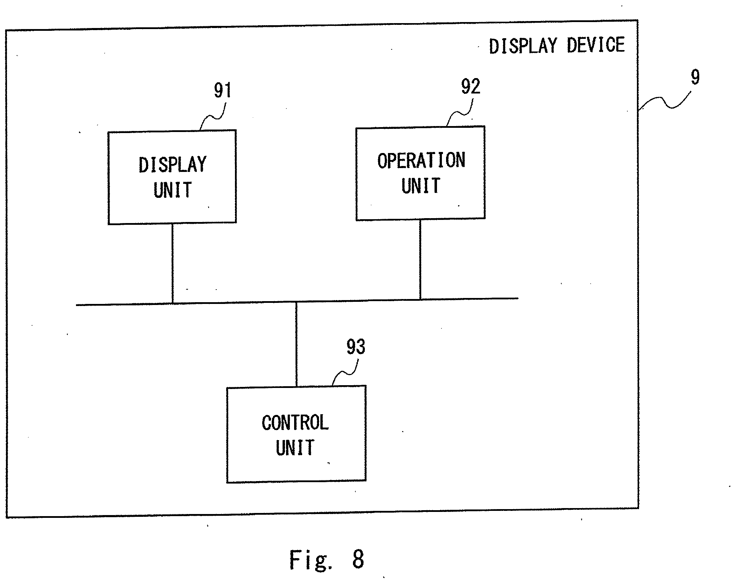

Next, a display device 9, which has a schematic configuration of a display device 100 according to an exemplary embodiment of the present invention, is explained with reference to Fig. 8. Fig. 8 is a block diagram showing a schematic configuration of a display device 100 according to an exemplary embodiment of the present invention.

The display device 9 includes a display unit 91, an operation unit 92, and a control unit 93.

The display unit 91 can display display information in each of a plurality of display areas. The display unit 91 corresponds to the display unit 12.

The operation unit 92 detects the position of an action performed on the display surface on which display information is displayed in the display unit 91. The operation unit 92 corresponds to the operation unit 120.

When the control unit 93 detects a movement of the action position detected by the operation unit 92 from the position on the display information, the control unit 93 performs control so that the display information is displayed in another display area located in the movement direction of the action position. The control unit 93 corresponds to the control unit 14.

With the configuration explained above, by specifying desired display information item among a plurality of display information items displayed in the respective display areas and performing an action so as to move it toward a desired destination display area, the desired display information item is displayed in the desired display area. That is, with this configuration, it is possible to update the display states of display information displayed in a plurality of display areas by using an intuitive, easy-to-understand action(s). Further, with this configuration, it is also possible to update not only display information item displayed in one display area but also display information that is displayed in another display area by the action at the same time.

Note that the present invention is not limited to the above-described exemplary embodiments and those exemplary embodiments can be modified as desired without departing from the scope of the present invention.

For example, although example cases where the number of contact points is one in the first action and the number of contact points is two in the second action are shown in the above-described exemplary embodiments, the numbers of contacts in these actions are not limited to the aforementioned numbers. That is, the number of contacts in each of the first and second actions may be arbitrarily determined in advance.

Further, although example cases where the display device 100 is a mobile phone are shown in the above-described exemplary embodiments, the devices to which the present invention is applied are not limited to mobile phones. The present invention can be applied any other display devices, provided that a display information item can be displayed in each of a plurality of display areas and the position of an action performed on the display surface of display information by a user can be detected. For example, the present invention may be applied to a touch-panel-type personal computer.

The display device 100 according to an exemplary embodiment of the present invention can be configured by causing a computer (display device 100) or a processor (CPU (Central Processing Unit), MPU (Micro Processing Unit), or the like) of a computer to execute a program for implementing functions of the above-described exemplary embodiments.

Further, this program can be stored in various types of non-transitory computer readable media and thereby supplied to computers. The non-transitory computer readable media includes various types of tangible storage media. Examples of the non-transitory computer readable media include a magnetic recording medium (such as a flexible disk, a magnetic tape, and a hard disk drive), a magneto-optic recording medium (such as a magneto-optic disk), a CD-ROM (Read Only Memory), a CD-R, and a CD-R/W, and a semiconductor memory (such as a mask ROM, a PROM (Programmable ROM), an EPROM (Erasable PROM), a flash ROM, and a RAM (Random Access Memory)). Further, the program can be supplied to computers by using various types of transitory computer readable media. Examples of the transitory computer readable media include an electrical signal, an optical signal, and an electromagnetic wave. The transitory computer readable media can be used to supply programs to computer through a wire communication path such as an electrical wire and an optical fiber, or wireless communication path.

Although the present invention is explained above with reference to exemplary embodiments, the present invention is not limited to the above-described exemplary embodiments. Various modifications that can be understood by those skilled in the art can be made to the configuration and details of the present invention within the scope of the invention.

### Reference Signs List

- 9, 100: DISPLAY DEVICE
- 11: POSTURE SENSOR
- 12, 91: DISPLAY UNIT
- 13: STORAGE UNIT
- 14, 93: CONTROL UNIT
- 15: COMMUNICATION UNIT
- 92, 120: OPERATION UNIT

## Claims

1. A display device (9, 100) comprising:
display means (12, 91) for displaying display information in each of a plurality of display areas;
operation means (92, 120) for detecting a position of an action performed on a display surface, the display information being displayed on the display surface in the display means (12, 91); and
control means (14, 93) for performing control so that, when a movement of the action position detected by the operation means (92, 120) from the position on the display information is detected, the display information is displayed in another display area located in a direction of the movement of the action position,
wherein the control means (14, 93) detects a movement of the action position detected by the operation means (92, 120) from the position on the display information, and when the number of detected action positions is equal to a predetermined number, performs control so that the display information is displayed in another display area located in a movement direction of the action position,
wherein the number of detected action positions is not equal to the predetermined number, the control means (14, 93) performs control so that the display information is moved in a direction corresponding to the movement direction of the action position and displayed in the moved place within the display area where the display information is originally included even when the movement of the action position detected by the operation means (92, 120) from the position on the display information is detected,
**characterised in that** the control means (14, 93) performs control so that a non-displayed part of the display information in the another display area is displayed in the original display area,
wherein the control means (14, 93) switches a display direction of the display information between a vertical direction and a horizontal direction according to a state of a non-displayed part of the display information in a state where the display information is displayed in an extended display area obtained by combining the another display area and the original display area, and
wherein when a direction in which there is a non-displayed part of the display information is one of the vertical and horizontal directions and a direction in which a size of the extended display area is larger is the other of the vertical and horizontal directions, hence when these directions are different from each other, the control means (14, 93) switches the display direction of the display information.

2. A display device (9, 100) comprising:
display means (12, 91) for displaying display information in each of a plurality of display areas;
operation means (92, 120) for detecting a position of an action performed on a display surface, the display information being displayed on the display surface in the display means (12, 91); and
control means (14, 93) for performing control so that, when a movement of the action position detected by the operation means (92, 120) from the position on the display information is detected, the display information is displayed in another display area located in a direction of the movement of the action position,
wherein the control means (14, 93) detects a movement of the action position detected by the operation means (92, 120) from the position on the display information, and when the number of detected action positions is equal to a predetermined number, performs control so that the display information is displayed in another display area located in a movement direction of the action position,
wherein the number of detected action positions is not equal to the predetermined number, the control means (14, 93) performs control so that the display information is moved in a direction corresponding to the movement direction of the action position and displayed in the moved place within the display area where the display information is originally included even when the movement of the action position detected by the operation means (92, 120) from the position on the display information is detected,
**characterised in that** the control means (14, 93) performs control so that a non-displayed part of the display information in the another display area is displayed in the original display area,
wherein the control means (14, 93) switches a display direction of the display information between a vertical direction and a horizontal direction according to a state of a non-displayed part of the display information in a state where the display information is displayed in an extended display area obtained by combining the another display area and the original display area, and
wherein when a direction in which a size of a non-displayed part of the display information is larger is one of the vertical and horizontal directions and a direction in which a size of the extended display area is larger is the other of the vertical and horizontal directions, hence when these directions are different from each other, the control means (14, 93) switches the display direction of the display information.

3. A display control method comprising:
displaying display information in display means (12, 91) for displaying the display information in each of a plurality of display areas;
detecting a position of an action performed on a display surface, the display information being displayed on the display surface in the display means (12, 91); and
displaying, when a movement of the detected action position from the position on the display information is detected, the display information in another display area located in a direction of the movement of the action position;
detecting a movement of the action position detected by the operation means (92, 120) from the position on the display information, and when the number of detected action positions is equal to a predetermined number, performs control so that the display information is displayed in another display area located in a movement direction of the action position, and
wherein the number of detected action positions is not equal to the predetermined number, the method further comprising performing control so that the display information is moved in a direction corresponding to the movement direction of the action position and displayed in the moved place within the display area where the display information is originally included even when the movement of the action position from the position on the display information is detected,
**characterised in that** the control is performed so that a non-displayed part of the display information in the another display area is displayed in the original display area,
wherein a display direction of the display information is switched between a vertical direction and a horizontal direction according to a state of a non-displayed part of the display information in a state where the display information is displayed in an extended display area obtained by combining the another display area and the original display area, and
wherein when a direction in which there is a non-displayed part of the display information is one of the vertical and horizontal directions and a direction in which a size of the extended display area is larger is the other of the vertical and horizontal directions, hence when these directions are different from each other, the display direction of the display information is switched.

4. A display control method comprising:
displaying display information in display means (12, 91) for displaying the display information in each of a plurality of display areas;
detecting a position of an action performed on a display surface, the display information being displayed on the display surface in the display means (12, 91); and
displaying, when a movement of the detected action position from the position on the display information is detected, the display information in another display area located in a direction of the movement of the action position;
detecting a movement of the action position detected by the operation means (92, 120) from the position on the display information, and when the number of detected action positions is equal to a predetermined number, performs control so that the display information is displayed in another display area located in a movement direction of the action position, and
wherein the number of detected action positions is not equal to the predetermined number, the method further comprising performing control so that the display information is moved in a direction corresponding to the movement direction of the action position and displayed in the moved place within the display area where the display information is originally included even when the movement of the action position from the position on the display information is detected,
**characterised in that** the control is performed so that a non-displayed part of the display information in the another display area is displayed in the original display area,
wherein a display direction of the display information is switched between a vertical direction and a horizontal direction according to a state of a non-displayed part of the display information in a state where the display information is displayed in an extended display area obtained by combining the another display area and the original display area, and
wherein when a direction in which a size of a non-displayed part of the display information is larger is one of the vertical and horizontal directions and a direction in which a size of the extended display area is larger is the other of the vertical and horizontal directions, hence when these directions are different from each other, the display direction of the display information is switched.

5. A non-transitory computer readable medium storing a display control program that causes a computer to execute:
a process of displaying display information in display means (12, 91) for displaying the display information in each of a plurality of display areas;
a process of detecting a position of an action performed on a display surface, the display information being displayed on the display surface in the display means (12, 91); and
a process of displaying, when a movement of the detected action position from the position on the display information is detected,
the display information in another display area located in a direction of the movement of the action position
a process of detecting a movement of the action position detected by the operation means (92, 120) from the position on the display information, and when the number of detected action positions is equal to a predetermined number, performs control so that the display information is displayed in another display area located in a movement direction of the action position, and
wherein the number of detected action positions is not equal to the predetermined number, the program causes to execute a process of performing control so that the display information is moved in a direction corresponding to the movement direction of the action position and displayed in the moved place within the display area where the display information is originally included even when the movement of the action position from the position on the display information is detected,
**characterised in that** the process of performing control is executed so that a non-displayed part of the display information in the another display area is displayed in the original display area,
wherein the program causes to execute a process of switching a display direction of the display information between a vertical direction and a horizontal direction according to a state of a non-displayed part of the display information in a state where the display information is displayed in an extended display area obtained by combining the another display area and the original display area, and
wherein when a direction in which there is a non-displayed part of the display information is one of the vertical and horizontal directions and a direction in which a size of the extended display area is larger is the other of the vertical and horizontal directions, hence when these directions are different from each other, the program causes to execute a process of switching the display direction of the display information.

6. A non-transitory computer readable medium storing a display control program that causes a computer to execute:
a process of displaying display information in display means (12, 91) for displaying the display information in each of a plurality of display areas;
a process of detecting a position of an action performed on a display surface, the display information being displayed on the display surface in the display means (12, 91); and
a process of displaying, when a movement of the detected action position from the position on the display information is detected,
the display information in another display area located in a direction of the movement of the action position
a process of detecting a movement of the action position detected by the operation means (92, 120) from the position on the display information, and when the number of detected action positions is equal to a predetermined number, performs control so that the display information is displayed in another display area located in a movement direction of the action position, and
wherein the number of detected action positions is not equal to the predetermined number, the program causes to execute a process of performing control so that the display information is moved in a direction corresponding to the movement direction of the action position and displayed in the moved place within the display area where the display information is originally included even when the movement of the action position from the position on the display information is detected,
**characterised in that** the process of performing control is executed so that a non-displayed part of the display information in the another display area is displayed in the original display area,
wherein the program causes to execute a process of switching a display direction of the display information between a vertical direction and a horizontal direction according to a state of a non-displayed part of the display information in a state where the display information is displayed in an extended display area obtained by combining the another display area and the original display area, and
wherein when a direction in which a size of a non-displayed part of the display information is larger is one of the vertical and horizontal directions and a direction in which a size of the extended display area is larger is the other of the vertical and horizontal directions, hence when these directions are different from each other, the program causes to execute a process of switching the display direction of the display information.

## Patentansprüche

1. Anzeigevorrichtung (9, 100) mit:
einer Anzeigeeinrichtung (12, 91) zum Anzeigen von Anzeigeinformation in einem jeweiligen von mehreren Anzeigebereichen;
einer Betätigungseinrichtung (92, 120) zum Erfassen einer Position einer auf einer Anzeigeoberfläche ausgeführten Aktion, wobei die Anzeigeinformation auf der Anzeigeoberfläche der Anzeigeeinrichtung (12, 91) angezeigt wird; und
einer Steuereinrichtung (14, 93) zum Ausführen einer Steuerung derart, dass, wenn eine Bewegung der durch die Betätigungseinrichtung (92, 120) erfassten Aktionsposition von der Position auf der Anzeigeinformation erfasst wird, die Anzeigeinformation in einem anderen Anzeigebereich angezeigt wird, der sich in einer Bewegungsrichtung der Aktionsposition befindet,
wobei die Steuereinrichtung (14, 93) eine Bewegung der durch die Betätigungseinrichtung (92, 120) erfassten Aktionsposition von der Position auf der Anzeigeinformation erfasst, und, wenn die Anzahl erfasster Aktionspositionen einer vorgegebenen Anzahl gleicht, die Steuerung derart ausführt, dass die Anzeigeinformation in einem anderen Anzeigebereich angezeigt wird, der sich in einer Bewegungsrichtung der Aktionsposition befindet,
wobei, wenn die Anzahl erfasster Aktionspositionen der vorgegebenen Anzahl nicht gleicht, die Steuereinrichtung (14, 93) eine Steuerung derart ausführt, dass die Anzeigeinformation in eine Richtung bewegt wird, die der Bewegungsrichtung der Aktionsposition entspricht, und an der bewegten Stelle innerhalb des Anzeigebereichs angezeigt wird, wo die Anzeigeinformation ursprünglich enthalten ist, auch wenn die Bewegung der durch die Betätigungseinrichtung (92, 120) erfassten Aktionsposition von der Position auf der Anzeigeinformation erfasst wird,
**dadurch gekennzeichnet, dass**
die Steuereinrichtung (14, 93) eine Steuerung derart ausführt, dass ein nicht angezeigter Teil der Anzeigeinformation in dem anderen Anzeigebereich im ursprünglichen Anzeigebereich angezeigt wird,
wobei die Steuereinrichtung (14, 93) eine Anzeigerichtung der Anzeigeinformation gemäß einem Zustand eines nicht angezeigten Teils der Anzeigeinformation zwischen einer vertikalen Richtung und einer horizontalen Richtung in einem Zustand umschaltet, in dem die Anzeigeinformation in einem erweiterten Anzeigebereich angezeigt wird, der durch Kombinieren des anderen Anzeigebereichs und des ursprünglichen Anzeigebereichs erhalten wird, und
wobei, wenn eine Richtung, in der ein nicht angezeigter Teil der Anzeigeinformation vorhanden ist, eine Richtung unter der vertikalen und der horizontalen Richtung ist, und eine Richtung, in der eine Größe des erweiterten Anzeigebereichs größer ist, die andere unter der vertikalen und der horizontalen Richtung ist, d.h., wenn diese Richtungen voneinander verschieden sind, die Steuereinrichtung (14, 93) die Anzeigerichtung der Anzeigeinformation umschaltet.

2. Anzeigevorrichtung (9, 100) mit:
einer Anzeigeeinrichtung (12, 91) zum Anzeigen von Anzeigeinformation in einem jeweiligen von mehreren Anzeigebereichen;
einer Betätigungseinrichtung (92, 120) zum Erfassen einer Position einer auf einer Anzeigeoberfläche ausgeführten Aktion, wobei die Anzeigeinformation auf der Anzeigeoberfläche der Anzeigeeinrichtung (12, 91) angezeigt wird; und
einer Steuereinrichtung (14, 93) zum Ausführen einer Steuerung derart, dass, wenn eine Bewegung der durch die Betätigungseinrichtung (92, 120) erfassten Aktionsposition von der Position auf der Anzeigeinformation erfasst wird, die Anzeigeinformation in einem anderen Anzeigebereich angezeigt wird, der sich in einer Bewegungsrichtung der Aktionsposition befindet,
wobei die Steuereinrichtung (14, 93) eine Bewegung der durch die Betätigungseinrichtung (92, 120) erfassten Aktionsposition von der Position auf der Anzeigeinformation erfasst, und, wenn die Anzahl der erfassten Aktionspositionen einer vorgegebenen Anzahl gleicht, die Steuerung derart ausführt, dass die Anzeigeinformation in einem anderen Anzeigebereich angezeigt wird, der sich in einer Bewegungsrichtung der Aktionsposition befindet,
wobei, wenn die Anzahl erfasster Aktionspositionen der vorgegebenen Anzahl nicht gleicht, die Steuereinrichtung (14, 93) eine Steuerung derart ausführt, dass die Anzeigeinformation in eine Richtung bewegt wird, die der Bewegungsrichtung der Aktionsposition entspricht, und an der bewegten Stelle innerhalb des Anzeigebereichs angezeigt wird, wo die Anzeigeinformation ursprünglich enthalten ist, auch wenn die Bewegung der durch die Betätigungseinrichtung (92, 120) erfassten Aktionsposition von der Position auf der Anzeigeinformation erfasst wird,
**dadurch gekennzeichnet, dass**
die Steuereinrichtung (14, 93) eine Steuerung derart ausführt, dass ein nicht angezeigter Teil der Anzeigeinformation in dem anderen Anzeigebereich im ursprünglichen Anzeigebereich angezeigt wird,
wobei die Steuereinrichtung (14, 93) eine Anzeigerichtung der Anzeigeinformation gemäß einem Zustand eines nicht angezeigten Teils der Anzeigeinformation zwischen einer vertikalen Richtung und einer horizontalen Richtung in einem Zustand umschaltet, in dem die Anzeigeinformation in einem erweiterten Anzeigebereich angezeigt wird, der durch Kombinieren des anderen Anzeigebereichs und des ursprünglichen Anzeigebereichs erhalten wird, und
wobei, wenn eine Richtung, in der eine Größe eines nicht angezeigten Teils der Anzeigeinformation größer ist, eine Richtung unter der vertikalen und der horizontalen Richtung ist, und eine Richtung, in der eine Größe des erweiterten Anzeigebereichs größer ist, die andere unter der vertikalen und der horizontalen Richtung ist, d.h., wenn diese Richtungen voneinander verschieden sind, die Steuereinrichtung (14, 93) die Anzeigerichtung der Anzeigeinformation umschaltet.

3. Anzeigesteuerverfahren mit den Schritten:
Anzeigen von Anzeigeinformation auf einer Anzeigeeinrichtung (12, 91) zum Anzeigen der Anzeigeinformation in einem jeweiligen von mehreren Anzeigebereichen;
Erfassen einer Position einer auf einer Anzeigeoberfläche ausgeführten Aktion, wobei die Anzeigeinformation auf der Anzeigeoberfläche der Anzeigeeinrichtung (12, 91) angezeigt wird;
Anzeigen der Anzeigeinformation in einem anderen Anzeigebereich, der sich in einer Bewegungsrichtung der Aktionsposition befindet, wenn eine Bewegung der erfassten Aktionsposition von der Position auf der Anzeigeinformation erfasst wird; und
Erfassen einer Bewegung der durch die Betätigungseinrichtung (92, 120) erfassten Aktionsposition von der Position auf der Anzeigeinformation, und, wenn die Anzahl der erfassten Aktionspositionen einer vorgegebenen Anzahl gleicht, Ausführen einer Steuerung derart, dass die Anzeigeinformation in einem anderen Anzeigebereich angezeigt wird, der sich in einer Bewegungsrichtung der Aktionsposition befindet,
wobei, wenn die Anzahl erfasster Aktionspositionen der vorgegebenen Anzahl nicht gleicht, das Verfahren ferner das Ausführen einer Steuerung derart aufweist, dass die Anzeigeinformation in eine Richtung bewegt wird, die der Bewegungsrichtung der Aktionsposition entspricht, und an der bewegten Stelle innerhalb des Anzeigebereichs angezeigt wird, wo die Anzeigeinformation ursprünglich enthalten ist, auch wenn die Bewegung der Aktionsposition von der Position auf der Anzeigeinformation erfasst wird,
**dadurch gekennzeichnet, dass**
die Steuerung derart ausgeführt wird, dass ein nicht angezeigter Teil der Anzeigeinformation in dem anderen Anzeigebereich im ursprünglichen Anzeigebereich angezeigt wird,
wobei eine Anzeigerichtung der Anzeigeinformation gemäß einem Zustand eines nicht angezeigten Teils der Anzeigeinformation zwischen einer vertikalen Richtung und einer horizontalen Richtung in einem Zustand umgeschaltet wird, in dem die Anzeigeinformation in einem erweiterten Anzeigebereich angezeigt wird, der durch Kombinieren des anderen Anzeigebereichs und des ursprünglichen Anzeigebereichs erhalten wird, und
wobei, wenn eine Richtung, in der ein nicht angezeigter Teil der Anzeigeinformation vorhanden ist, eine Richtung unter der vertikalen und der horizontalen Richtung ist, und eine Richtung, in der eine Größe des erweiterten Anzeigebereichs größer ist, die andere unter der vertikalen und der horizontalen Richtung ist, d.h., wenn diese Richtungen voneinander verschieden sind, die Anzeigerichtung der Anzeigeinformation umgeschaltet wird.

4. Anzeigesteuerverfahren mit den Schritten:
Anzeigen von Anzeigeinformation auf einer Anzeigeeinrichtung (12, 91) zum Anzeigen der Anzeigeinformation in einem jeweiligen von mehreren Anzeigebereichen;
Erfassen einer Position einer auf einer Anzeigeoberfläche ausgeführten Aktion, wobei die Anzeigeinformation auf der Anzeigeoberfläche der Anzeigeeinrichtung (12, 91) angezeigt wird;
Anzeigen der Anzeigeinformation in einem anderen Anzeigebereich, der sich in einer Bewegungsrichtung der Aktionsposition befindet, wenn eine Bewegung der erfassten Aktionsposition von der Position auf der Anzeigeinformation erfasst wird; und
Erfassen einer Bewegung der durch die Betätigungseinrichtung (92, 120) erfassten Aktionsposition von der Position auf der Anzeigeinformation, und, wenn die Anzahl erfasster Aktionspositionen einer vorgegebenen Anzahl gleicht, Ausführen einer Steuerung derart, dass die Anzeigeinformation in einem anderen Anzeigebereich angezeigt wird, der sich in einer Bewegungsrichtung der Aktionsposition befindet,
wobei, wenn die Anzahl erfasster Aktionspositionen der vorgegebenen Anzahl nicht gleicht, das Verfahren ferner das Ausführen einer Steuerung derart aufweist, dass die Anzeigeinformation in eine Richtung bewegt wird, die der Bewegungsrichtung der Aktionsposition entspricht, und an der bewegten Stelle innerhalb des Anzeigebereichs angezeigt wird, wo die Anzeigeinformation ursprünglich enthalten ist, auch wenn die Bewegung der Aktionsposition von der Position auf der Anzeigeinformation erfasst wird,
**dadurch gekennzeichnet, dass**
die Steuerung derart ausgeführt wird, dass ein nicht angezeigter Teil der Anzeigeinformation in dem anderen Anzeigebereich im ursprünglichen Anzeigebereich angezeigt wird,
wobei eine Anzeigerichtung der Anzeigeinformation gemäß einem Zustand eines nicht angezeigten Teils der Anzeigeinformation zwischen einer vertikalen Richtung und einer horizontalen Richtung in einem Zustand umgeschaltet wird, in dem die Anzeigeinformation in einem erweiterten Anzeigebereich angezeigt wird, der durch Kombinieren des anderen Anzeigebereichs und des ursprünglichen Anzeigebereichs erhalten wird, und
wobei, wenn eine Richtung, in der ein nicht angezeigter Teil der Anzeigeinformation größer ist, eine Richtung unter der vertikalen und der horizontalen Richtung ist, und eine Richtung, in der eine Größe des erweiterten Anzeigebereichs größer ist, die andere unter der vertikalen und der horizontalen Richtung ist, d.h., wenn diese Richtungen voneinander verschieden sind, die Anzeigerichtung der Anzeigeinformation umgeschaltet wird.

5. Nichtflüchtiges computerlesbares Medium, auf dem ein Anzeigesteuerprogramm gespeichert ist, das einen Computer veranlasst, auszuführen:
einen Prozess zum Anzeigen von Anzeigeinformation auf einer Anzeigeeinrichtung (12, 91) zum Anzeigen der Anzeigeinformation in einem jeweiligen von mehreren Anzeigebereichen;
einen Prozess zum Erfassen einer Position einer auf einer Anzeigeoberfläche ausgeführten Aktion, wobei die Anzeigeinformation auf der Anzeigeoberfläche der Anzeigeeinrichtung (12, 91) angezeigt wird; und
einen Prozess zum Anzeigen der Anzeigeinformation in einem anderen Anzeigebereich, der sich in einer Bewegungsrichtung der Aktionsposition befindet, wenn eine Bewegung der erfassten Aktionsposition von der Position auf der Anzeigeinformation erfasst wird; und
einen Prozess zum Erfassen einer Bewegung der durch die Betätigungseinrichtung (92, 120) erfassten Aktionsposition von der Position auf der Anzeigeinformation, und, wenn die Anzahl der erfassten Aktionspositionen einer vorgegebenen Anzahl gleicht, zum Ausführen einer Steuerung derart, dass die Anzeigeinformation in einem anderen Anzeigebereich angezeigt wird, der sich in einer Bewegungsrichtung der Aktionsposition befindet,
wobei, wenn die Anzahl erfasster Aktionspositionen der vorgegebenen Anzahl nicht gleicht, das Programm ferner veranlasst, einen Prozess zum Ausführen einer Steuerung derart auszuführen, dass die Anzeigeinformation in eine Richtung bewegt wird, die der Bewegungsrichtung der Aktionsposition entspricht, und an der bewegten Stelle innerhalb des Anzeigebereichs angezeigt wird, wo die Anzeigeinformation ursprünglich enthalten ist, auch wenn die Bewegung der Aktionsposition von der Position auf der Anzeigeinformation erfasst wird,
**dadurch gekennzeichnet, dass**
der Prozess zum Ausführen einer Steuerung derart ausgeführt wird, dass ein nicht angezeigter Teil der Anzeigeinformation in dem anderen Anzeigebereich im ursprünglichen Anzeigebereich angezeigt wird,
wobei das Programm ferner veranlasst, einen Prozess zum Umschalten einer Anzeigerichtung der Anzeigeinformation gemäß einem Zustand eines nicht angezeigten Teils der Anzeigeinformation zwischen einer vertikalen Richtung und einer horizontalen Richtung in einem Zustand auszuführen, in dem die Anzeigeinformation in einem erweiterten Anzeigebereich angezeigt wird, der durch Kombinieren des anderen Anzeigebereichs und des ursprünglichen Anzeigebereichs erhalten wird, und
wobei, wenn eine Richtung, in der ein nicht angezeigter Teil der Anzeigeinformation vorhanden ist, eine Richtung unter der vertikalen und der horizontalen Richtung ist, und eine Richtung, in der eine Größe des erweiterten Anzeigebereichs größer ist, die andere unter der vertikalen und der horizontalen Richtung ist, d.h., wenn diese Richtungen voneinander verschieden sind, das Programm ferner veranlasst, einen Prozess zum Umschalten der Anzeigerichtung der Anzeigeinformation auszuführen.

6. Nichtflüchtiges computerlesbares Medium, auf dem ein Anzeigesteuerprogramm gespeichert ist, das einen Computer veranlasst, auszuführen:
einen Prozess zum Anzeigen von Anzeigeinformation auf einer Anzeigeeinrichtung (12, 91) zum Anzeigen der Anzeigeinformation in einem jeweiligen von mehreren Anzeigebereichen;
einen Prozess zum Erfassen einer Position einer auf einer Anzeigeoberfläche ausgeführten Aktion, wobei die Anzeigeinformation auf der Anzeigeoberfläche der Anzeigeeinrichtung (12, 91) angezeigt wird;
einen Prozess zum Anzeigen der Anzeigeinformation in einem anderen Anzeigebereich, der sich in einer Bewegungsrichtung der Aktionsposition befindet, wenn eine Bewegung der erfassten Aktionsposition von der Position auf der Anzeigeinformation erfasst wird;
einen Prozess zum Erfassen einer Bewegung der durch die Betätigungseinrichtung (92, 120) erfassten Aktionsposition von der Position auf der Anzeigeinformation, und, wenn die Anzahl der erfassten Aktionspositionen einer vorgegebenen Anzahl gleicht, zum Ausführen einer Steuerung derart, dass die Anzeigeinformation in einem anderen Anzeigebereich angezeigt wird, der sich in einer Bewegungsrichtung der Aktionsposition befindet,
wobei, wenn die Anzahl erfasster Aktionspositionen der vorgegebenen Anzahl nicht gleicht, das Programm ferner veranlasst, einen Prozess zum Ausführen einer Steuerung derart auszuführen, dass die Anzeigeinformation in eine Richtung bewegt wird, die der Bewegungsrichtung der Aktionsposition entspricht, und an der bewegten Stelle innerhalb des Anzeigebereichs angezeigt wird, wo die Anzeigeinformation ursprünglich enthalten ist, auch wenn die Bewegung der Aktionsposition von der Position auf der Anzeigeinformation erfasst wird,
**dadurch gekennzeichnet, dass**
der Prozess zum Ausführen einer Steuerung derart ausgeführt wird, dass ein nicht angezeigter Teil der Anzeigeinformation in dem anderen Anzeigebereich im ursprünglichen Anzeigebereich angezeigt wird,
wobei das Programm ferner veranlasst, einen Prozess zum Umschalten einer Anzeigerichtung der Anzeigeinformation gemäß einem Zustand eines nicht angezeigten Teils der Anzeigeinformation zwischen einer vertikalen Richtung und einer horizontalen Richtung in einem Zustand auszuführen, in dem die Anzeigeinformation in einem erweiterten Anzeigebereich angezeigt wird, der durch Kombinieren des anderen Anzeigebereichs und des ursprünglichen Anzeigebereichs erhalten wird, und
wobei, wenn eine Richtung, in der eine Größe eines nicht angezeigten Teils der Anzeigeinformation größer ist, eine Richtung unter der vertikalen und der horizontalen Richtung ist, und eine Richtung, in der eine Größe des erweiterten Anzeigebereichs größer ist, die andere unter der vertikalen und der horizontalen Richtung ist, d.h., wenn diese Richtungen voneinander verschieden sind, das Programm ferner veranlasst, einen Prozess zum Umschalten der Anzeigerichtung der Anzeigeinformation auszuführen.

## Revendications

1. Afficheur (9, 100) comprenant :
un moyen d'affichage (12, 91) pour afficher des informations d'affichage dans chacune d'une pluralité de zones d'affichage ;
un moyen d'opération (92, 120) pour détecter une position d'une action réalisée sur une surface d'affichage, les informations d'affichage étant affichées sur la surface d'affichage dans le moyen d'affichage (12, 91) ; et
un moyen de commande (14, 93) pour réaliser une commande de sorte que, lorsqu'un déplacement de la position d'action détectée par le moyen d'opération (92, 120) depuis la position sur les informations d'affichage est détecté, les informations d'affichage sont affichées dans une autre zone d'affichage située dans une direction de déplacement de la position d'action,
dans lequel le moyen de commande (14, 93) détecte un déplacement de la position d'action détectée par le moyen d'opération (92, 120) depuis la position sur les informations d'affichage, et lorsque le nombre de positions d'action détectées est égal à un nombre prédéterminé, réalise une commande de sorte que les informations d'affichage sont affichées dans une autre zone d'affichage située dans une direction de déplacement de la position d'action,
dans lequel le nombre de positions d'action détectées n'est pas égal au nombre prédéterminé, le moyen de commande (14, 93) réalise une commande de sorte que les informations d'affichage sont déplacées dans une direction correspondant à la direction de déplacement de la position d'action et affichées à l'emplacement déplacé à l'intérieur de la zone d'affichage où les informations d'affichage sont incluses à l'origine même lorsque le déplacement de la position d'action détectée par le moyen d'opération (92, 120) depuis la position sur les informations d'affichage est détecté,
**caractérisé en ce que** le moyen de commande (14, 93) réalise une commande de sorte qu'une partie non affichée des informations d'affichage dans l'autre zone d'affichage est affichée dans la zone d'affichage originale,
dans lequel le moyen de commande (14, 93) commute une direction d'affichage des informations d'affichage entre une direction verticale et une direction horizontale selon un état d'une partie non affichée des informations d'affichage dans un état où les informations d'affichage sont affichées dans une zone d'affichage étendue obtenue par combinaison de l'autre zone d'affichage et de la zone d'affichage originale, et
dans lequel lorsqu'une direction dans laquelle il y a une partie non affichée des informations d'affichage est une des directions verticale et horizontale et une direction dans laquelle une taille de la zone d'affichage étendue est plus grande que l'autre des directions verticale et horizontale, donc lorsque ces directions sont différentes l'une de l'autre, le moyen de commande (14, 93) commute la direction d'affichage des informations d'affichage.

2. Afficheur (9, 100) comprenant :
un moyen d'affichage (12, 91) pour afficher des informations d'affichage dans chacune d'une pluralité de zones d'affichage ;
un moyen d'opération (92, 120) pour détecter une position d'une action réalisée sur une surface d'affichage, les informations d'affichage étant affichées sur la surface d'affichage dans le moyen d'affichage (12, 91) ; et
un moyen de commande (14, 93) pour réaliser une commande de sorte que, lorsqu'un déplacement de la position d'action détectée par le moyen d'opération (92, 120) depuis la position sur les informations d'affichage est détecté, les informations d'affichage sont affichées dans une autre zone d'affichage située dans une direction du déplacement de la position d'action,
dans lequel le moyen de commande (14, 93) détecte un déplacement de la position d'action détectée par le moyen d'opération (92, 120) depuis la position sur les informations d'affichage, et lorsque le nombre de positions d'action détectées est égal à un nombre prédéterminé, réalise une commande de sorte que les informations d'affichage sont affichées dans une autre zone d'affichage située dans une direction de déplacement de la position d'action,
dans lequel le nombre de positions d'action détectées n'est pas égal au nombre prédéterminé, le moyen de commande (14, 93) réalise une commande de sorte que les informations d'affichage sont déplacées dans une direction correspondant à la direction de déplacement de la position d'action et affichées à l'emplacement déplacé à l'intérieur de la zone d'affichage où les informations d'affichage sont incluses à l'origine même lorsque le déplacement de la position d'action détectée par le moyen d'opération (92, 120) depuis la position sur des informations d'affichage est détecté, **caractérisé en ce que** le moyen de commande (14, 93) réalise une commande de sorte qu'une partie non affichée des informations d'affichage dans l'autre zone d'affichage est affichée dans la zone d'affichage originale,
dans lequel le moyen de commande (14, 93) commute une direction d'affichage des informations d'affichage entre une direction verticale et une direction horizontale selon un état d'une partie non affichée des informations d'affichage dans un état où les informations d'affichage sont affichées dans une zone d'affichage étendue obtenue par combinaison de l'autre zone d'affichage et la zone d'affichage originale, et
dans lequel lorsqu'une direction, dans laquelle une taille d'une partie non affichée des informations d'affichage est plus grande, est une des directions verticale et horizontale et une direction, dans laquelle une taille de la zone d'affichage étendue est plus grande, est l'autre des directions verticale et horizontale, donc lorsque ces directions sont différentes l'une de l'autre, le moyen de commande (14, 93) commute la direction d'affichage des informations d'affichage.

3. Procédé de commande d'affichage comprenant :
l'affichage d'informations d'affichage dans un moyen d'affichage (12, 91) pour afficher les informations d'affichage dans chacune d'une pluralité de zones d'affichage ;
la détection d'une position d'une action réalisée sur une surface d'affichage, les informations d'affichage étant affichées sur la surface d'affichage dans le moyen d'affichage (12, 91) ; et
l'affichage, lorsqu'un déplacement de la position d'action détectée depuis la position sur les informations d'affichage est détecté, l'affichage des informations d'affichage dans une autre zone d'affichage située dans une direction du déplacement de la position d'action ;
la détection d'un déplacement de la position d'action détectée par le moyen d'opération (92, 120) depuis la position sur les informations d'affichage, et lorsque le nombre de positions d'action détectées est égal à un nombre prédéterminé, réalise une commande de sorte que les informations d'affichage sont affichées dans une autre zone d'affichage située dans une direction de déplacement de la position d'action, et
dans lequel le nombre de positions d'action détectées n'est pas égal au nombre prédéterminé, le procédé comprenant en outre la réalisation d'une commande de sorte que les informations d'affichage sont déplacées dans une direction correspondant à la direction de déplacement de la position d'action et affichées à l'emplacement déplacé à l'intérieur de la zone d'affichage où les informations d'affichage sont incluses à l'origine même lorsque le déplacement de la position d'action depuis la position sur les informations d'affichage est détecté,
**caractérisé en ce que** la commande est réalisée de sorte qu'une partie non affichée des informations d'affichage dans l'autre zone d'affichage est affichée dans la zone d'affichage originale,
dans lequel une direction d'affichage des informations d'affichage est commutée entre une direction verticale et une direction horizontale selon un état d'une partie non affichée des informations d'affichage dans un état où les informations d'affichage sont affichées dans une zone d'affichage étendue obtenue par combinaison de l'autre zone d'affichage et la zone d'affichage originale, et
dans lequel lorsqu'une direction, dans laquelle il y a une partie non affichée des informations d'affichage, est une des directions verticale et horizontale et une direction, dans laquelle une taille de la zone d'affichage étendue est plus grande, est l'autre des directions verticale et horizontale, donc lorsque ces directions sont différentes l'une de l'autre, la direction d'affichage des informations d'affichage est commutée.

4. Procédé de commande d'affichage comprenant :
l'affichage d'informations d'affichage dans un moyen d'affichage (12, 91) pour afficher les informations d'affichage dans chacune d'une pluralité de zones d'affichage ;
la détection d'une position d'une action réalisée sur une surface d'affichage, les informations d'affichage étant affichées sur la surface d'affichage dans le moyen d'affichage (12, 91) ; et
l'affichage, lorsqu'un déplacement de la position d'action détectée depuis la position sur les informations d'affichage est détecté, l'affichage des informations d'affichage dans une autre zone d'affichage située dans une direction du déplacement de la position d'action ;
la détection d'un déplacement de la position d'action détectée par le moyen d'opération (92, 120) depuis la position sur les informations d'affichage, et lorsque le nombre de positions d'action détectées est égal à un nombre prédéterminé, réalise une commande de sorte que les informations d'affichage sont affichées dans une autre zone d'affichage située dans une direction de déplacement de la position d'action, et
dans lequel le nombre de positions d'action détectées n'est pas égal au nombre prédéterminé, le procédé comprenant en outre la réalisation d'une commande de sorte que les informations d'affichage sont déplacées dans une direction correspondant à la direction de déplacement de la position d'action et affichées à l'emplacement déplacé à l'intérieur de la zone d'affichage où les informations d'affichage sont incluses à l'origine même lorsque le déplacement de la position d'action depuis la position sur les informations d'affichage est détecté,
**caractérisé en ce que** la commande est réalisée de sorte qu'une partie non affichée des informations d'affichage dans l'autre zone d'affichage est affichée dans la zone d'affichage originale,
dans lequel une direction d'affichage des informations d'affichage est commutée entre une direction verticale et une direction horizontale selon un état d'une partie non affichée des informations d'affichage dans un état où les informations d'affichage sont affichées dans une zone d'affichage étendue obtenue par combinaison de l'autre zone d'affichage et de la zone d'affichage originale, et
dans lequel lorsqu'une direction, dans laquelle une taille d'une partie non affichée des informations d'affichage est plus grande, est une des directions verticale et horizontale et une direction, dans laquelle une taille de la zone d'affichage étendue est plus grande, est l'autre des directions verticale et horizontale, donc lorsque ces directions sont différentes l'une de l'autre, la direction d'affichage des informations d'affichage est commutée.

5. Support non transitoire lisible par ordinateur stockant un programme de commande d'affichage qui amène un ordinateur à exécuter :
un processus d'affichage d'informations d'affichage dans un moyen d'affichage (12, 91) pour afficher les informations d'affichage dans chacune d'une pluralité de zones d'affichage ;
un processus de détection d'une position d'une action réalisée sur une surface d'affichage, les informations d'affichage étant affichées sur la surface d'affichage dans le moyen d'affichage (12, 91) ; et
un processus d'affichage, lorsqu'un déplacement de la position d'action détectée depuis la position sur les informations d'affichage est détecté, affichant les informations d'affichage dans une autre zone d'affichage située dans une direction du déplacement de la position d'action
un processus de détection d'un déplacement de la position d'action détectée par le moyen d'opération (92, 120) depuis la position sur les informations d'affichage, et lorsque le nombre de positions d'action détectées est égal à un nombre prédéterminé, réalise une commande de sorte que les informations d'affichage sont affichées dans une autre zone d'affichage située dans une direction de déplacement de la position d'action, et
dans lequel le nombre de positions d'action détectées n'est pas égal au nombre prédéterminé, le programme provoque l'exécution d'un processus de réalisation d'une commande de sorte que les informations d'affichage sont déplacées dans une direction correspondant à la direction de déplacement de la position d'action et affichées à l'emplacement déplacé à l'intérieur de la zone d'affichage où les informations d'affichage sont incluses à l'origine même lorsque le déplacement de la position d'action depuis la position sur les informations d'affichage est détecté,
**caractérisé en ce que** le processus de réalisation une commande est exécuté de sorte qu'une partie non affichée des informations d'affichage dans l'autre zone d'affichage est affichée dans la zone d'affichage originale,
dans lequel le programme provoque l'exécution d'un processus de commutation d'une direction d'affichage des informations d'affichage entre une direction verticale et une direction horizontale selon un état d'une partie non affichée des informations d'affichage dans un état où les informations d'affichage sont affichées dans une zone d'affichage étendue obtenue par combinaison de l'autre zone d'affichage et de la zone d'affichage originale, et
dans lequel lorsqu'une direction, dans laquelle il y a une partie non affichée des informations d'affichage, est une des directions verticale et horizontale et une direction, dans laquelle une taille de la zone d'affichage étendue est plus grande, est l'autre des directions verticale et horizontale, donc lorsque ces directions sont différentes l'une de l'autre, le programme provoque l'exécution d'un processus de commutation de la direction d'affichage des informations d'affichage.

6. Support non transitoire lisible par ordinateur stockant un programme de commande d'affichage qui amène un ordinateur à exécuter :
un processus d'affichage d'informations d'affichage dans un moyen d'affichage (12, 91) pour afficher les informations d'affichage dans chacune d'une pluralité de zones d'affichage ;
un processus de détection d'une position d'une action réalisée sur une surface d'affichage, les informations d'affichage étant affichées sur la surface d'affichage dans le moyen d'affichage (12, 91) ; et
un processus d'affichage, lorsqu'un déplacement de la position d'action détectée depuis la position sur les informations d'affichage est détecté, affichant les informations d'affichage dans une zone d'affichage située dans une direction du déplacement de la position d'action
un processus de détection d'un déplacement de la position d'action détectée par le moyen d'opération (92, 120) depuis la position sur les informations d'affichage, et lorsque le nombre de positions d'action détectées est égal à un nombre prédéterminé, réalise une commande de sorte que les informations d'affichage sont affichées dans une autre zone d'affichage située dans une direction de déplacement de la position d'action, et
dans lequel le nombre de positions d'action détectées n'est pas égal au nombre prédéterminé, le programme provoque l'exécution d'un processus de réalisation d'une commande de sorte que les informations d'affichage sont déplacées dans une direction correspondant à la direction de déplacement de la position d'action et affichées à l'emplacement déplacé à l'intérieur de la zone d'affichage où les informations d'affichage sont incluses à l'origine même lorsque le déplacement de la position d'action depuis la position sur les informations d'affichage est détecté,
**caractérisé en ce que** le processus de réalisation d'une commande est exécuté de sorte qu'une partie non affichée des informations d'affichage dans l'autre zone d'affichage est affichée dans la zone d'affichage originale,
dans lequel le programme provoque l'exécution d'un processus de commutation d'une direction d'affichage des informations d'affichage entre une direction verticale et une direction horizontale selon un état d'une partie non affichée des informations d'affichage dans un état où les informations d'affichage sont affichées dans une zone d'affichage étendue obtenue par combinaison de l'autre zone d'affichage et de la zone d'affichage originale, et
dans lequel lorsqu'une direction, dans laquelle une taille d'une partie non affichée des informations d'affichage est plus grande, est une des directions verticale et horizontale et une direction, dans laquelle une taille de la zone d'affichage étendue est plus grande, est l'autre des directions verticale et horizontale, donc lorsque ces directions sont différentes l'une de l'autre, le programme provoque l'exécution d'un processus de commutation de la direction d'affichage des informations d'affichage.
